# EUROPÄISCHE PATENTSCHRIFT

(11) **EP 0 423 633 B1**
(45) Veröffentlichungstag und Bekanntmachung des Hinweises auf die Patenterteilung: **24.11.1993**
(21) Anmeldenummer: 90119578.4
(22) Anmeldetag: 12.10.1990
(51) Int. Cl.: F16K 3/08, F16K 27/04

(54) **Absperr- und Regulierventil**
Stop and regulating valve
Vanne d'arrêt et de régulation

(30) Priorität: 20.10.1989 DE 3934977
(43) Veröffentlichungstag der Anmeldung: 24.04.1991
(73) Patentinhaber: FRIEDRICH GROHE AKTIENGESELLSCHAFT, D-58675 Hemer (DE)
(72) Erfinder: Körfgen, Harald, W-5758 Fröndenberg (DE); Hirsch, Heinz, W-4770 Soest (DE); Grendel, Vinzenz, W-5870 Hemer (DE)

(56) Entgegenhaltungen:
- EP-A- 0 311 598
- DE-A- 3 107 431

## Beschreibung

Die Erfindung betrifft ein Absperr- und Regulierventil, insbesondere für sanitäre Armaturen, mit den im Oberbegriff des Anspruchs 1 angegebenen Merkmalen.
Ein Mischventil dieser Art ist aus der Druckschrift DE-A-31 07 431 bekannt. Die Mitnehmerspindel im Bereich der bewegten Ventilregulierscheibe weist hierin einen, bezogen auf den Durchmesser der beiden Ventilscheiben, relativ großen Querschnitt auf. Außerdem ist es erforderlich, daß die beiden aneinanderliegenden Ventilscheiben, die Ventilsitzscheibe und die Ventilregulierscheibe, eine Mindestüberdeckung der Scheiben erreichen, um in der Absperrstellung eine Abdichtung zu gewährleisten. Für ein Absperr- und Regulierventil, welches mit einem Einschraubgewinde von 1/2'' versehen ist, wie es meist für Sanitärarmaturen verwendet wird, wird der Querschnitt der Durchtrittsöffnung für das durchströmende Medium so klein, so daß die geforderten Durchströmleistungen für Ventile dieser Klasse nicht erreicht werden.

Der Erfindung liegt die Aufgabe zugrunde, das Ventil nach dem Oberbegriff des Patentanspruchs 1 zu verbessern und so auszubilden, daß eine optimale Durchflußleistung erzielt wird.
Diese Aufgabe wird erfindungsgemäß dadurch gelöst, daß die Ventilspindel von einem äußeren Spindeltei und einem schlanken inneren Spindelteil aus hochfestem Material gebildet ist, und das der innere Spindelteil mit dem äußeren Spindelteil und der Ventilregulierscheibe formschlüssig, wenigstens an einer der Verbindungsstellen axial verschiebbar verbunden ist. Durch diese Ausbildung wird erreicht, daß nahezu der Durchtrittsquerschnitt des inneren Teils der Ventilspindel durch die Ventilsitzscheibe vernachlässigbar klein ist. Außerdem wird mit dieser erfindungsgemäßen Anordnung ein relativ einfacher Aufbau des als Baueinheit in Sanitärarmaturenkörper einzusetzenden Ventils erreicht, das darüber hinaus problemlos zusammenmontiert werden kann.
Weitere Ausgestaltungen der Erfindung sind in den Ansprüchen 2 bis 10 angegeben.

Ausführungsbeispiele der Erfindung sind in der Zeichnung dargestellt und werden im folgenden näher beschrieben. Es zeigt
- Figur 1: ein in Sanitärarmaturenkörper als eine Baueinheit einsetzbares Absperr- und Regulierventil im Längsschnitt;
- Figur 2: einen Teil eines modifizierten Absperr- und Regulierventils gemäß Figur 1 im Längsschnitt;
- Figur 3: ein anderes Absperr- und Mengenregulierventil im Längsschnitt;
- Figur 4: das Absperr- und Regulierventil gemäß Figur 3 in der Schnittebene IV;
- Figur 5: das Absperr- und Regulierventil gemäß Figur 3 in der Schnittebene V.

Der Einfachheit halber sind bei den Ausführungsbeispielen in der Zeichnung gleiche oder entsprechende Elemente mit jeweils gleichen Bezugszeichen versehen.

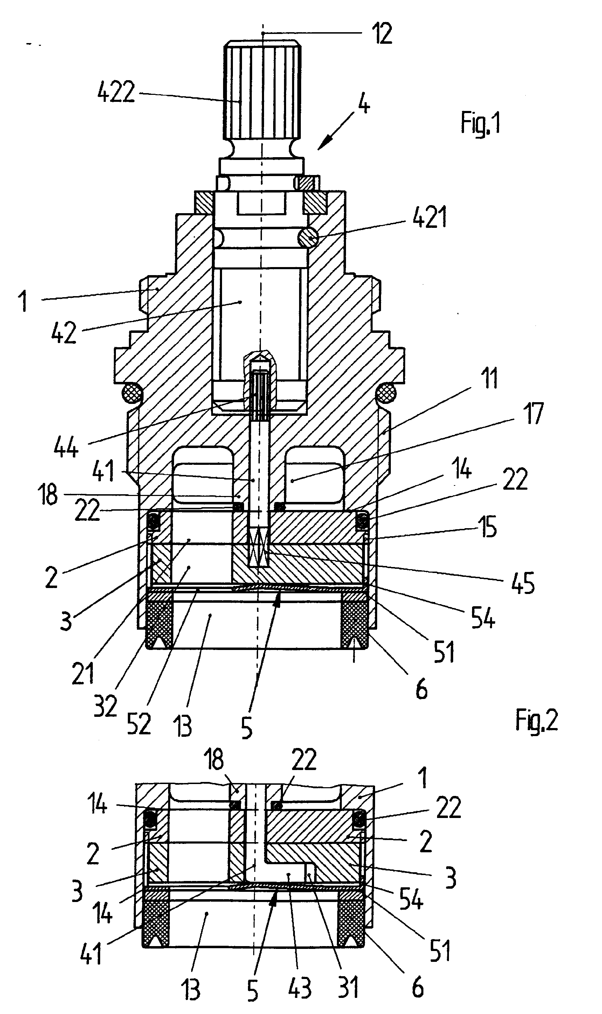

Das in Figur 1 gezeigte Absperr- und Regulierventil besteht aus einem hülsenförmigen Gehäuse 1 mit einem Einschraubgewinde 11, das dem Rohrgewinde 1/2'' entspricht. Konzentrisch zur Mittelachse 12 ist das Gehäuse 1 durchbohrt und die Ventilspindel 4 angeordnet. Die Ventilspindel 4 wird dabei von einem inneren Spindelteil 41 und einem äußeren Spindelteil 42 gebildet. Der äußere Spindelteil 42 ist in einer Lagerbohrung angeordnet und mit einem Arretierstift 421 axial, aber drehbar im Gehäuse 1 gesichert. An dem aus dem Gehäuse 1 vorstehenden Zapfen 422 ist eine Riefenverzahnung aufgebracht für die Verbindung mit einem in der Zeichnung nicht dargestellten Griffstück. An der dem äußeren Spindelteil 42 gegenüberliegenden Seite des Gehäuses 1 ist eine gestufte Einlaßöffnung 13 in dem Gehäuse 1 ausgebildet, in der im Grund eine Ventilsitzscheibe 2, danach eine Ventilregulierscheibe 3, eine Feder 5 und schließlich ein Dichtelement 6 angeordnet ist. Die Ventilsitzscheibe 2 liegt dabei an einer Ringschulter 14 im Gehäuse 1 an und wird außerdem in Axialnuten 15 im Gehäuse mit Hilfe von Vorsprüngen drehfest gehaltert. Stromaufwärts vor der Ventilsitzscheibe 2 ist die Ventilregulierscheibe 3 angelagert und weist zentral eine Aufnahme für einen Vierkant des inneren Spindelteils 41 auf. Der Spindelteil 41 hat einen Durchmesser von 2 mm. An der gegenüberliegenden Seite des inneren Spindelteils 41 ist eine Riefenverzahnung 44 ausgebildet, die in eine entsprechende Ausnehmung an der Stirnseite des äußeren Spindelteils 42 einfaßt und somit eine drehfeste Verbindung zwischen dem Zapfen 422 und der Ventilregulierscheibe 3 herstellt.
Damit die drehbare Ventilregulierscheibe 3 gegen die Dichtfläche der Ventilsitzscheibe 2 mit der erforderlichen Vorspannung gepreßt wird, ist vor der Ventilregulierscheibe 3 eine Feder 5 in Form einer entsprechend dem Außenumfang der Ventilsitzscheibe 2 gestalteten Abdeckscheibe 51 vorgesehen. Die Abdeckscheibe 51 hat zur guten Mediumsführung eine Durchtrittsöffnung 52, die etwa kongruent zu der Durchtrittsöffnung 21 in der Ventilsitzscheibe 2 ausgebildet und angeordnet ist.

In Figur 2 ist ein abgewardeltes Absperr- und Regulierventil gemäß Figur 1 gezeigt, wobei lediglich die geänderten Teile dargestellt sind. Im übrigen entspricht das Ventil dem gemäß Figur 1. Der innere Spindelteil 41 ist hierbei mit einem Exzenterfuß 43 versehen, der an der stromaufwärts gelegenen Stirnseite der Ventilregulierscheibe 3 in eine entsprechende Aufnahme 31 einfaßt, wobei das Spindelteil 41 durch eine entsprechende Bohrung in der Ventilregulierscheibe 3 und der Ventilsitzscheibe 2 zum äußeren Spindelteil 42 geführt ist und hier mittels Riefenverzahnung 44 drehfest gekoppelt ist. Zur Abdichtung des Spindelteils 41 in der Ventilregulierscheibe 3 ist der Exzenterfuß 43 in der Aufnahme 31 verklebt oder verkittet.

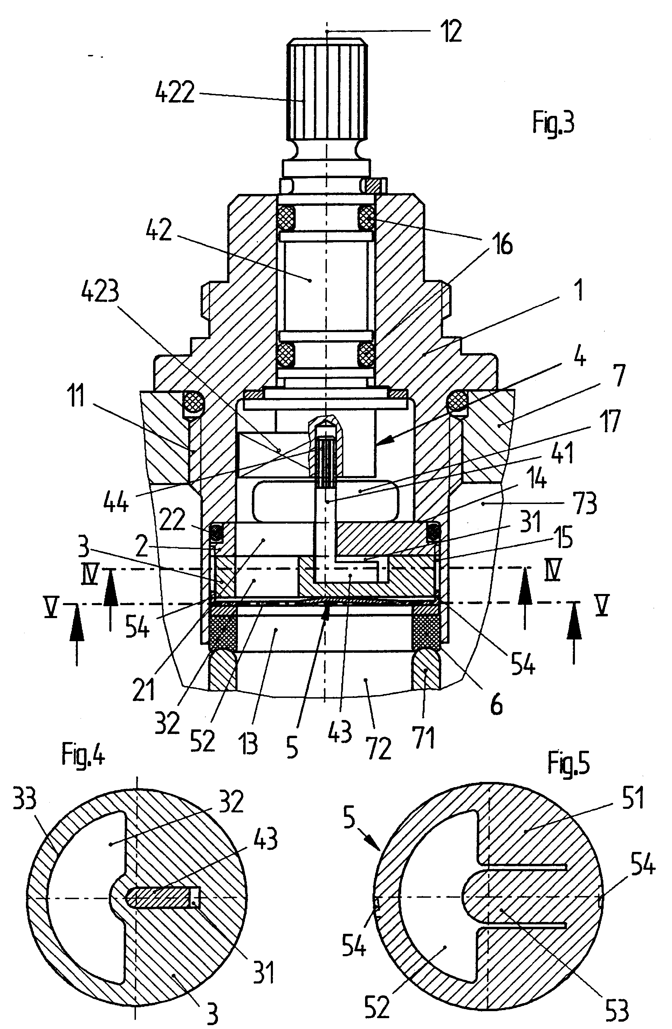

In Figur 3 ist schließlich ein weiteres Ausführungsbeispiel des erfindungsgemäßen Ventils gezeigt, wobei das Ventil in einen zum Teil dargestellten Armaturenkörper 7 einmontiert ist. Der äußere Spindelteil 42 ist hierbei mit O-Ringen 16 gedichtet in dem Gehäuse 1 gelagert. Der Exzenterfuß 43 des inneren Spindelteils 41 ist an der stromabwärts gelegenen Stirnseite der Ventilregulierscheibe 3 in einer Aufnahme 31 eingesenkt, derart, daß die Ventilsitzscheibe 2 in der Einbaulage die Ausnehmung 31 zu einer im wesentlichen geschlossenen Kammer bildet, in der der innere Spindelteil 41 auch axial gesichert wird.

Die vorstehend beschrieberen, eine Baueinheit bildenden Absperr- und Regulierventile können in folgender Weise montiert und betrieben werden:
Bei dem in Figur 3 gezeigten Ventil wird zunächst der innere Spindelteil 41 mit der Ventilregulierscheibe 3 und der Ventilsitzscheibe 2 zusammengefügt, wonach der äußere mit Dichtringen 16 versehene Spindelteil 42 auf die Riefenverzahnung 44 aufgesteckt und danach die gesamte Einheit zusammen mit dem Dichtring 22 in die Einlaßöffnung 13 des Gehäuses 1 eingeschoben wird. Hierbei gelangt die Ventilsitzscheibe 2 mit ihren Vorsprüngen in die Axialnuten 15, so daß diese drehfest, aber axial verschiebbar in dem Gehäuse 1 gehaltert ist, während die Ventilregulierscheibe 3 drehbar mit der Ventilspindel 4 gekoppelt ist. Hiernach kann die Feder 5 und das Dichtelement 6 ebenfalls in die Einlaßöffnung 13 des Gehäuses 1 eingeschoben werden. Die Feder 5 ist dabei in Form einer Abdeckscheibe 51 ausgebildet, wie es aus Figur 5 zu entnehmen ist, in der eine etwa kongruent zur Durchtrittsöffnung 21 in der Ventilsitzscheibe 2 ausgebildete Durchtrittsöffnung 52 vorgesehen ist. Die eigentliche Feder ist als Federarm 53 ausgebildet, der lediglich am äußeren Rand mit der Abdeckscheibe 51 verbunden ist. Damit eine kongruente Anordnung der Durchtrittsöffnungen 22 und 52 erzielbar ist, ist die Abdeckscheibe 51 mit um 90° umgebogenen Vorsprüngen 54 versehen, die in der Montagelage in die Axialnuten 15 am Gehäuse 1 einfassen. In der Montagelage gelangt darüber hinaus die Abdeckscheibe 51 an eine im Gehäuse 1 ausgebildete Ringschulter 14 zur Anlage, so daß die Abdeckscheibe 51 außerdem eine axiale Abstützung des Dichtelements 6 bewirkt, welches einerseits die Abdichtung zur Wadung der Einlaßöffnung 13 und andererseits stirnseitig zu einem Ventilsitz 71 des Armaturenkörpers 7 beim Einsatz der Ventilbaueinheit herstellt. Mit Hilfe der stromaufwärts vor der Ventilregulierscheibe 3 angeordneten Abdeckscheibe 51 wird neben der Halterung der Feder 5 erreicht, daß die Strömung des Mediums etwa parallel zur Mittelachse 12 gerichtet wird, so daß in Drosselstellungen ein seitliches Anströmen der Ventilscheiben vermieden ist, wodurch die Ventilregulierscheibe 3 sich in unerwünschter Weise selbsttätig verdrehen könnte. Darüber hinaus wird durch die Abdeckscheibe 51 ein Auswaschen von zwischen den Ventilscheiben angeordnetes Gleitmittel (Fett) reduziert. Nach dem Einbau kann somit das zuströmende Medium vom Einlaßkanal 72 in die Einlaßöffnung 13 des Gehäuses 1 über die Durchtrittsöffnung 52 in die in Figur 4 gezeigte Durchtrittsöffnung 32 der Ventilregulierscheibe 3 und von hier über die Durchtrittsöffnung 21 und danach radial durch die Auslaßöffnungen 17 im Gehäuse 1 in den Auslaßkanal 73 des Armaturenkörpers 7 fließen. Die Durchtrittsöffnungen 21,32,52 weisen dabei einen Kreisbogen 33 von etwas unter 180° auf, so daß eine hinreichende Überdeckung der Ventilscheiben für eine Absperrung gewährleistet ist. Die Aufnahme 31 für den Exzenterfuß 43 ist hierbei senkrecht zur Basis der Kreisringsegmentfläche der Durchtrittsöffnung 32 angeordnet, wie es insbesondere aus Figur 4 entnehmbar ist.

Zur Drehbegrenzung der Spindel 4 auf 180° ist auf dem äußeren Spindelteil 42 ein Anschlagexzenter 423 ausgebildet, der mit Anschlagnasen im Gehäuse 1 zusammenwirkt.

Bei den Ausführungsbeispielen gemäß Figur 1 und 2 ist zusätzlich noch eine koaxiale Nabe 18 zur besseren Abstützung der Ventilsitzscheibe 2 im Gehäuse 1 ausgebildet, wodurch außerdem dynamisch beanspruchte Dichtungen an der Ventilspindel 4 entfallen können.

## Patentansprüche

1. Absperr- und Regulierventil mit einem wenigstens eine axiale Einlaß- und eine radiale Auslaßöffnung (13,17) aufweisenden, in Armaturenkörper (7) einsetzbaren Gehäuse (1), in dem quer zur Längsachse (12) eine mit wenigstens einer Durchtrittsöffnung (21) versehene Ventilsitzscheibe (2) unverdrehbar gehalten ist und an der eine mit einer im Gehäuse (1) gelagerten, zweiteilig ausgebildeten, Ventilspinder (4) verdrehbare Ventilregulierscheibe (3) an der stromaufwärts gelegenen Seite anliegt, wobei die Ventilregulierscheibe (3) mit Hilfe einer Feder (5) gegen die Ventilsitzscheibe (2) gestrammt, beide Ventilscheiben (2,3) von einer stromaufwärts gelegenen Einlaßöffnung (13) in das Gehäuse (1) einsetzbar sind und zwischen dem Zulaufkanal des Armaturenkörpers und dem Gehäuse ein Dichtelement (6) vorgesehen ist, dadurch gekennzeichnet, daß die Ventilspindel (4) von einem äußeren Spindelteil (42) und einem schlanken inneren Spindelteil (41) aus hochfestem Material gebildet ist, und daß der innere Spindelteil (41) mit dem äußeren Spindelteil (42) und der Ventilregulierscheibe (3) formschlüssig, wenigstens an einer der Verbindungsstellen axial verschiebbar verbunden ist.

2. Absperr- und Regulierventil nach Anspruch 1, dadurch gekennzeichnet, daß der innere Spindelteil (41) mit dem äußeren Spindelteil (42) mittels Polygonprofil verbunden ist.

3. Absperr- und Regulierventil nach Anspruch 2, dadurch gekennzeichnet, daß die Verbindung mittels Riefenverzahnung (44), Sechs- oder Vierkant erfolgt.

4. Absperr- und Regulierventil nach einem der Ansprüche 1 bis 3, dadurch gekennzeichnet, daß der innere Spindelteil (41) aus hochfestem Stahl hergestellt ist.

5. Absperr- und Regulierventil nach Anspruch 4, dadurch gekennzeichnet, daß bei einem Gehäuse (1) mit einem Einschraubgewinde (11) von 1/2'' Rohrgewinde der innere Spindelteil (41) einen Durchmesser von etwa 2 mm aufweist.

6. Absperr- und Regulierventil nach einem der Ansprüche 1 bis 5, dadurch gekennzeichnet, daß der innere Spindelteil (41) einen Exzenterfuß (43) hat, der in eine entsprechende Aufnahme (31) in der Ventilregulierscheibe (3) einfaßt.

7. Absperr- und Regulierventil nach Anspruch 6, dadurch gekennzeichnet, daß der Exzenterfuß (43) von der stromaufwärts gelegenen Stirnseite aus in die Aufnahme (31) eingesetzt und fest und dicht, z.B. verklebt oder verkittet, mit der Ventilregulierscheibe (3) verbunden ist.

8. Absperr- und Regulierventil nach Anspruch 6, dadurch gekennzeichnet, daß die Aufnahme (31) in der stromabwärts gelegenen Stirnseite der Ventilregulierscheibe (3) angeordnet ist, derart, daß die Aufnahme (31) eine von der Ventilsitzscheibe (2) im wesentlichen verschlossenen Kammer bildet und somit in der Einbaulage auch die Axialsicherung des inneren Spindelteils (41) bildet.

9. Absperr- und Regulierventil nach wenigstens einem der Ansprüche 1 bis 8, dadurch gekennzeichnet, daß die Feder (5) zur Andrückung der Ventilregulierscheibe (3) als stromaufwärts liegende Abdeckscheibe (51) ausgebildet ist, deren Durchtrittsöffnung (52) etwa der Durchtrittsöffnung (32) in der Ventilregulierscheibe (3) entspricht, wobei ein ins Zentrum der Ventilregulierscheibe (3) reichender Federarm (53) vorgesehen ist, der am Randbereich in die Abdeckscheibe (51) übergeht, im übrigen aber zur Abdeckscheibe (51) federnd bewegbar ist.

10. Absperr- und Regulierventil nach wenigstens einem der Ansprüche 1 bis 9, dadurch gekennzeichnet, daß eine kreisringsegmentförmige Durchtrittsöffnung (52) in der Ventilregulierscheibe (3) ausgebildet ist, deren Kreisbogen (33) geringfügig unterhalb 180° beträgt, und die Aufnahme (31) etwa senkrecht zur Basis des Kreisbogens (33) angeordnet ist.

## Claims

1. Shut-off and regulating valve with a housing (1) which has at least one axial inlet opening and a radial outlet opening (13, 17) and can be installed in fitting bodies (7), and in which in a transverse direction with respect to the longitudinal axis (12) there is non-rotatably held a valve seat disc (2) provided with at least one passage opening (21) and against which valve seat disc there comes to bear on the upstream side a valve regulating disc (3) rotatable by a valve spindle (4), of two-part construction, mounted in the housing (1), the valve regulating disc (3) being urged tight against the valve seat disc (2) by means of a spring (5), both valve discs (2, 3) being able to be inserted into the housing (1) from an inlet opening (13) provided upstream, and a sealing element (6) being provided between the inflow channel of the fitting body and the housing, characterised in that the valve spindle (4) is formed of an outer spindle part (42) and a slim inner spindle part (41) of high strength material, and in that the inner spindle part (41) is positively connected to the outer spindle part (42) and the valve regulating disc (3) so as to be axially movable, at least at one of the connecting points.

2. Shut-off and regulating valve according to Claim 1, characterised in that the inner spindle part (41) is connected to the outer spindle part (42) by means of a spline profile.

3. Shut-off and regulating valve according to Claim 2, characterised in that the connection is effected by means of grooved toothing (44), a hexagon or a square.

4. Shut-off and regulating valve according to one of Claims 1 to 3, characterised in that the inner spindle part (41) is produced from high strength steel.

5. Shut-off and regulating valve according to Claim 4, characterised in that in a housing (1) with a screw-in thread (11) of 1/2'' pipe thread the inner spindle part (41) has a diameter of approximately 2 mm.

6. Shut-off and regulating valve according to one of Claims 1 to 5, characterised in that the inner spindle part (41) has an eccentric foot (43) which engages in a corresponding socket (31) in the valve regulating disc (3).

7. Shut-off and regulating valve according to Claim 6, characterised in that the eccentric foot (43) is inserted into the socket (31) from the upstream end face and rigidly and sealingly connected, for example adhesively secured or cemented, to the valve regulating disc (3).

8. Shut-off and regulating valve according to Claim 6, characterised in that the socket (31) is arranged in the downstream end face of the valve regulating disc (3) in such a way that the socket (31) forms a chanber which is substantially closed by the valve seat disc (2) and thus, in the installed position, also forms the axial securing means of the inner spindle part (41).

9. Shut-off and regulating valve according to at least one of Claims 1 to 8, characterised in that the spring (5) for pressing on the valve regulating disc (3) is in the form of a cover disc (51) which lies upstream and the passage opening (52) of which corresponds approximately to the passage opening (32) in the valve regulating disc (3), a spring arm (53) being provided which extends into the centre of the valve regulating disc (3) and merges at the edge region into the cover disc (51), but is otherwise resiliently movable with respect to the cover disc (51).

10. Shut-off and regulating valve according to at least one of Claims 1 to 9, characterised in that in the valve regulating disc (3) a passage opening (52) in the shape of a segment of a circle is formed, the arc (33) of which is slightly less than 180°, and the socket (31) is arranged approximately perpendicularly to the base of the arc (33).

## Revendications

1. Cartouche de robinet d'arrêt et de régulation comportant' au moins un orifice d'entrée axial et un orifice de sortie radial (13, 17) susceptible d'être logé dans le boîtier (1) d'un corps de robinet (7) dans lequel, transversalement à l'axe longitudinal (12), on a au moins un disque de siège de robinet (2) muni d'un orifice de passage (21), ce disque étant maintenu bloqué en rotation et comporte un disque de régulation de robinet (3) susceptible de tourner, avec une broche de robinet (4) en deux parties, montée dans le boîtier (1), en s'appliquant par le côté amont, le disque de robinet de régulation (3) étant poussé par un ressort (5) contre le disque formant siège de robinet (2), les deux disques de robinet (2, 3) étant logés dans le boîtier (1) à partir d'une ouverture d'entrée (13) située en amont et entre le canal d'arrivée du corps du robinet et le boîtier il est prévu un élément d'étanchéité (6), caractérisé en ce que la broche de robinet (4) est formée d'une partie extérieure de broche (42) et d'une partie intérieure étroite (41) en un matériau très résistant, et en ce que la partie intérieure de broche (41) est reliée à la partie extérieure de broche (42) et au disque de régulation de robinet (3) par une liaison par la forme, coulissante axialement sur au moins l'un des points de liaison.

2. Cartouche de robinet d'arrêt et de régulation selon la revendication 1, caractérisé en ce que la partie intérieure de broche (41) est reliée à la partie extérieure de broche (42) par un profil polygonal.

3. Cartouche de robinet d'arrêt et de régulation selon la revendication 2, caractérisée en ce que la liaison se fait par une denture à rainure (44), une liaison à six ou quatre pans.

4. Cartouche de robinet d'arrêt et de régulation selon l'une des revendications 1 à 3, caractérisée en ce que la partie intérieure de broche (41) est réalisée en un acier très résistant.

5. Cartouche de robinet d'arrêt et de régulation selon la revendication 4, caractérisée en ce que pour un boîtier (1) avec un filetage (11) correspondant à un filetage de tuyau de 1/2'', la partie intérieure (41) de la broche a un diamètre d'environ 2 mm.

6. Cartouche de robinet d'arrêt et de régulation selon l'une des revendications 1 à 5, caractérisée en ce que la partie intérieure de broche (41) présente un talon excentré (43) venant prendre dans une cavité correspondante (31) du disque de régulation de robinet (3).

7. Cartouche de robinet d'arrêt et de régulation selon la revendication 6, caractérisée en ce que le talon excentré (43) se loge dans la cavité (31) à partir de la face frontale située en amont et est relié solidairement et de manière étanche par exemple par collage ou masticage au disque de régulation (3).

8. Cartouche de robinet d'arrêt et de régulation selon la revendication 6, caractérisée en ce que le logement (31) est prévu dans la face frontale aval du disque de régulation (3) de manière que le logement (31) forme une chambre essentiellement fermée par le disque siège de robinet (2) et en ce qu'en position montée, elle forme également la fixation axiale de la partie intérieure (41) de la broche.

9. Cartouche de robinet d'arrêt et de régulation selon au moins l'une des revendications 1 à 8, caractérisée en ce que le ressort (5) est réalisé pour pousser le disque de régulation (3) comme disque de recouvrement (51) situé en amont et dont l'ouverture de passage (52) correspond sensiblement à l'ouverture de passage (32) du disque de régulation (3), un bras de ressort (53) étant prévu pour arriver jusqu'au centre du disque de régulation (3), ce bras rejoignant dans la zone périphérique le disque de recouvrement (51) tout en étant mobile élastiquement pour le reste par rapport au disque de recouvrement (51).

10. Cartouche de robinet d'arrêt et de régulation selon au moins l'une des revendications 1 à 9, caractérisée par un orifice de passage (52) en forme de segment d'anneau réalisé dans le disque de régulation (3) et dont l'arc angulaire (33) est légèrement inférieur à 180° et la cavité (31) est prévue sensiblement perpendiculairement à la base de l'arc (33).
